(19) Europäisches Patentamt
European Patent Office
Office européen des brevets

(11) Publication number: **0 414 944 A1**

(12) **EUROPEAN PATENT APPLICATION**

(21) Application number: **89116089.7**

(22) Date of filing: **31.08.89**

(51) Int. Cl.[5]: **C08L 69/00**, C08L 79/08, C08K 3/32, C08L 67/02, //(C08L79/08,69:00,C08K3:32), (C08L79/08,69:00,67:02, C08K3:32)

(43) Date of publication of application: **06.03.91 Bulletin 91/10**

(84) Designated Contracting States: **DE FR GB IT NL**

(71) Applicant: **GENERAL ELECTRIC COMPANY**
**1 River Road**
**Schenectady New York 12305(US)**

(72) Inventor: **Tyrell, John Alfred**
**140 Raymond Drive**
**Dalton Massachusetts 01226(US)**
Inventor: **McCready, Russel James**
**1320 Ridgeview Circle**
**Downington Pennsylvania 19335(US)**

(74) Representative: **Catherine, Alain**
**General Electric France Service de Propriété Industrielle 18 Rue Horace Vernet**
**F-92136 Issy-Les-Moulineaux Cedex(FR)**

(54) **Stabilized polycarbonate-polyetherimide ester compositions.**

(57) Compositions comprising a polycarbonate resin, e.g., poly(bisphenol A carbonate) and a polyetherimide ester resin are melt stabilized with monosodium phosphate and/or monopotassium phosphate.

EP 0 414 944 A1

## STABILIZED POLYCARBONATE-POLYETHERIMIDE ESTER COMPOSITIONS

This invention related generally to polycarbonate-polyetherimide ester resin compositions, alone, or in further combination with other resins, and more particularly to methods for stabilizing blends of high molecular weight thermoplastic polycarbonates and polyetherimide esters against undesirable changes in melting point.

### BACKGROUND OF THE INVENTION

Polyetherimide ester elastomers comprised of the reaction products of (a) a low molecular weight diol, (b) a dicarboxylic acid, (c) a high molecular weight poly(oxy alkylene)diamine, and (d) a tricarboxylic acid or its derivative are known and are described in U.S. Patent Nos. 4,544,734 and 4,556,705 to McCready and in U.S. Patent No. 4,556,688 to McCready et al. These polyetherimide esters exhibit excellent stress-strain properties, low tensile set, high melting temperatures and/or excellent strength/toughness characteristics as well as superior flexibility, which properties render said polyetherimide esters especially suitable for molding and extrusion applications.

Blends of such polyetherimide ester resins with one or more second resins have become of significant commercial interest because such second resins, carefully selected, can improve certain physical properties of the polyetherimide ester resins. By way of illustration, such second resins can comprise aromatic polycarbonate resins.

Polycarbonate-polyetherimide ester resin compositions are disclosed in copending Patent Application Serial Number . It has been discovered that these compositions alone, or in combination with other resins, have, however, a tendency to be unstable in the molten states as evidenced by a change in melting point.

It has now been discovered that two specific inorganic phosphorus reagents, monosodium phosphate and monopotassium phosphate, alone, or in combination, are highly effective to stabilize such polycarbonate-polyetherimide ester resin compositions containing, predominantly, polycarbonate, especially if the polyetherimide ester is made with a titanium compound catalyst, e.g., tetra octyl titanate. Monosodium phosphate and monopotassium phosphate, both rather innocuous, mildly acidic reagents, are surprisingly effective as stabilizers for polycarbonate-polyetherimide ester compositions. The stabilizers can be used in various manners, including prior incorporation as a concentrate in the polycarbonate resin, or in the polyetherimide ester resin. In addition to the high degree of reliability as stabilizers in such compositions, monosodium phosphate and/or monopotassium phosphate do not detrimentally affect any of the resinous components in the composition, e.g., the polycarbonates, or the polyetherimide ester.

Also difficult to melt stabilize are combinations of polycarbonates and polyetherimide ester resins with third resins such as polyolefin terephthalates. Such formulations are rendered reliably melt stable with monosodium phosphate and/or monopotassium phosphate, according to the present invention. In addition to the specific instances noted above, melt stabilization can also be induced in other combinations of polycarbonates with polyetherimide ester and other resins, especially those in which an active catalyst was used to prepare one or all of the polymers in the blend.

### SUMMARY OF THE INVENTION

Accordingly to the present invention, there are provided thermoplastic compositions comprising a polycarbonate and at least one polyetherimide ester resin, or in further combination with at least one additional resin, melt stabilized with monosodium phosphate and/or monopotassium phosphate.

### DESCRIPTION OF THE INVENTION

Any amount of the monosodium and/or monopotassium phosphate will melt stabilize a polycarbonate-polyetherimide ester resin blend. Preferably, however, from about 0.01 parts to about 7.5 parts by weight of

the phosphate should be used, and most preferably, from about 0.1 parts to about 4.0 parts by weight should be used, based on 100 parts by weight of the total polyetherimide ester resinous component in the composition. Although the phosphates are, as mentioned, relatively innocuous, amounts larger than about 10.0 parts by weight should be used with caution since such larger amounts will provide melt stability, but might also deleteriously affect the mechanical properties of one or more of the resins in the composition.

The phosphate of the invention may be mixed with the polymers by any suitable means. Since most phosphates are solids, they can be most expeditiously mixed with the resin either as a precompounded concentrate, or directly into the melt, e.g., in an extruder.

The polyetherimide ester elastomers utilized in the invention contain imide groups, polyether groups, and ester groups in the polymer chain. They are comprised of the reaction products of:

(i) at least one diol;

(ii) at least one carboxylic acid or its ester forming reactive derivative; and

(iii) a set of reactants selected from

(a) (1) at least one high molecular weight poly(oxy alkylene)diamine, and (2) at least one tricarboxylic acid or its derivative, or

(b) at least one high molecular weight polyoxyalkylene diimide diacid.

Suitable diols (i) for use in the preparation of the polyetherimide ester polymers of the present invention include the saturated and unsaturated aliphatic and cycloaliphatic dihydroxy compounds as well as the aromatic dihydroxy compounds. These diols are preferably of a low molecular weight, i.e., having a molecular weight of about 250 or less. When used herein, the term "diol" and "low molecular weight diol" should be construed to include equivalent ester forming derivatives thereof provided, however, that the aforementioned molecular weight requirement pertains to the diols only and not to their ester forming derivatives. Exemplary of ester forming derivatives of diols there may be given the acetates of the diols as well as, for example, ethylene oxide or ethylene carbonate for ethylene glycol.

The preferred saturated and unsaturated aliphatic acid cycloaliphatic diols are those having from 2 to about 15 carbon atoms. Especially preferred are 1,4-butanediol and mixtures thereof with hexanediol, 1,4-cyclohexane dimethanol, or butanediol, most preferably 1,4-butanediol.

Aromatic diols suitable for use in the practice of the present invention are generally those having from 6 to about 15 carbon atoms.

Especially preferred diols are the saturated aliphatic diols, mixtures thereof, and mixtures of a saturated diol(s) with an unsaturated diol(s), wherein each diol contains from 2 to about 8 carbon atoms. Where more than one diol is employed, it is generally preferred that at least about 60 mole %, based on the total diol content, be the same diol, more preferably at least 80 mole %. As mentioned above, the preferred compositions are those in which 1,4-butanediol is present in a predominant amount, most preferably when 1,4-butanediol is the only diol.

Dicarboxylic acids (ii) which are suitable for use in the practice of the present invention are aliphatic, cycloaliphatic and/or aromatic dicarboxylic acids. These acids are preferably of a low molecular weight, i.e., having a molecular weight of less than about 300. However, in some cases higher molecular weight dicarboxylic acids may be used. The term "dicarboxylic acids" as used herein, includes equivalents of dicarboxylic acids having two functional carboxyl groups which perform substantially like dicarboxylic acids in reaction with glycols and diols in forming polyesters. These equivalents include esters and ester forming reactive derivatives, such as acid halides and anhydrides. The molecular weight preference mentioned above pertains to the acid and not to its equivalent ester or ester-forming derivatives. Thus, an ester of dicarboxylic acid having a molecular weight greater than about 300 or an acid equivalent of dicarboxylic acid having a molecular weight greater than about 300 are included provided the acid has a molecular weight below about 300. Additionally, the dicarboxylic acids may contain any substituent group(s) or combinations which do not substantially interfere with the polymer formation and use of the polymer of this invention.

Aliphatic dicarboxylic acids, as the term is used herein, refer to carboxylic acids having two carboxyl groups each of which is attached to a saturated carbon atom. If the carbon atom to which the carboxyl group is attached is saturated and is in a ring, the acid is cycloaliphatic.

Aromatic dicarboxylic acids, as the term is used herein, are dicarboxylic acids having two carboxyl groups each of which is attached to a carbon atom in an isolated or fused benzene ring system. It is not necessary that both functional carboxyl groups be attached to the same aromatic ring and where more than one ring is present, they can be joined by aliphatic or aromatic divalent radical such as -O- or $-SO_2-$.

Preferred aliphatic acids are cyclohexene dicarboxylic acids, sebacic acid, glutaric acid and adipic acid.

Preferred dicarboxylic acids for the preparation of the polyetherimide esters of the present invention are the aromatic dicarboxylic acids, mixtures thereof and mixtures of one or more dicarboxylic acids with an

aliphatic and/or cycloaliphatic dicarboxylic acid, most preferably the aromatic dicarboxylic acids. Among the aromatic acids those with 8-16 carbon atoms are preferred, particularly the benzene dicarboxylic acids, i.e., phthalic, terephthalic and isophthalic acids and their dimethyl derivatives. Especially preferred is dimethyl terephthalate.

Finally, where mixtures of dicarboxylic acids are employed in the practice of the present invention, it is preferred at that least about 60 mole %, preferably at least 80 mole %, based on 100 mole % of dicarboxylic acid (ii) be the same dicarboxylic acid or ester derivative thereof.

The polyetherimide ester polymers of the present invention may be prepared by a one-pot synthesis involving the reaction of the diol (i), the dicarboxylic acid (ii), the high molecular weight poly(oxy alkylene)-diamine (iii)(a)(1), and the tricarboxylic acid or its derivative (iii)(a)(2). In such a synthesis the polyoxyalkylene diimide diacid (iii)(b) is formed in-situ by the reaction of the poly(oxy alkylene)diamine with the tricarboxylic acid.

The poly(oxy alkylene)diamines (iii)(a)(1) suitable for use in the present invention may be represented by the following general formula

I. $H_2N\text{-}G\text{-}NH_2$

wherein G is the radical remaining after the removal of the amino groups of a long chain alkylene ether diamine. These polyether diprimary diamines are available commercially from Texaco Chemical Company under the trademark JEFFAMINE. In general they are prepared by known processes for the amination of glycols. For example, they may be prepared by aminating the glycol in the presence of ammonia, Raney nickel catalyst and hydrogen as set forth in Belgium Pat. No. 634,741. Alternatively, they may be prepared by treating glycol with ammonia and hydrogen over a Nickel-Copper-Chromium catalyst as taught by U.S. Patent No. 3,654,370. Other methods for the production thereof include those taught by U.S. Patent Nos. 3,155,728 and 3,236, 895 and French Nos. 1,551,605 and 1,466,708, all of the foregoing patents being incorporated herein by reference.

The long chain ether diamines suitable for use herein are the polymeric diamines having terminal (or as nearly terminal as possible) amine groups and an average molecular weight of from about 600 to about 12,000, preferably from about 900 to about 4,000. Additionally, the long chain ether diamines will generally have a carbon-to-oxygen ratio of from about 1.8 to about 4.3.

In general, the polyoxylkylene diamines useful in the practice of the present invention have an average molecular weight of from about 600 to about 12,000, preferably from about 900 to about 4,000.

The tricarboxylic acid (iii)(a)(2) may be almost any carboxylic acid anhydride containing an additional carboxylic group or the corresponding acid thereof containing two imide-forming vicinal carboxyl groups in lieu of the anhydride group. Mixtures thereof are also suitable. The additional carboxylic group must be esterifiable.

These tricarboxylic acid materials can be characterized by the following general formula

II. 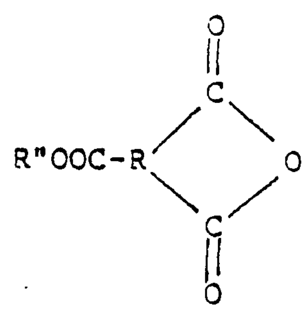

wherein:

R is a trivalent organic radical, preferably a $C_1$-$C_{20}$ aliphatic or cycloaliphatic, or $C_6$-$C_{20}$ aromatic trivalent radical;

$R''$ is preferably hydrogen or a monovalent organic radical which is preferably selected from $C_1$-$C_6$ aliphatic and/or cycloaliphatic radicals and $C_6$-$C_{12}$ aromatic radicals, e.g., phenyl, tolyl or benzyl; $R''$ is most preferably hydrogen.

In the preparation of the instant polyetherimide ester polymers sufficient amounts of diol versus dicarboxylic acid, and tricarboxylic acid versus diamine must be present, as recognized in the art, to allow for substantially complete polymerization.

This type of one-pot reaction involving the reactions of (i) a diol component, (ii) a dicarboxylic acid

component, (iii)(a)(1) a poly(oxy alkylene)diamine component, and (iii)(a)(2) a tricarboxylic acid component is described in U.S. Patent No. 4,556,688 to McCready et al. incorporated herein by reference.

The amount by which the diamine (iii)(a)(1) and the dicarboxylic acid (ii) are used is generally not critical in forming the polyetherimide esters of the present invention. However, preferred amounts of the poly(oxy alkylene)diamine and dicarboxylic acid used are such that the weight ratio of the theoretical amount of the polyoxyalkylene diimide diacic, formable from poly(oxy alkylene)diamine and the tricarboxylic acid, to the dicarboxylic acid is from about 0.002 to 2.0:1, preferably from about 0.01 to 2.0:1, and more preferably from about 0.25 to 2.0, and most preferably from about 0.4 to 1.4. The actual weight ratio will be dependent upon the specific poly(oxy alkylene)diamine and tricarboxylic acid used and more importantly upon the desired physical and chemical properties of the resultant polyetherimide ester.

The instant polyetherimide esters may also be prepared by a two-pot synthesis involving the reaction of the diol (i), the dicarboxylic acid (ii), and the polyoxyalkylene diimide diacid (iii) (b). Such a reaction is described in U.S. Patent No. 4,556,705 to McCready, incorporated herein by reference.

The polyoxyalkylene diimide diacid (iii)(b) may be represented by the general formula

III. 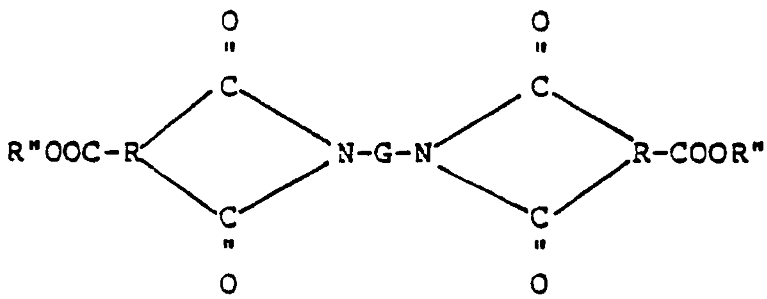

wherein G, R and R″ are as defined hereinafore.

The polyoxyalkylene diimide diacids of Formula III suitable for use herein are high molecular weight diimide diacids having an average molecular weight greater than about 700, preferably greater than about 900. They may be prepared by the imidization reaction of one or more tricarboxylic acids (iii)(a)(2) containing two vicinal carboxyl groups or an anhydride group and an additional carboxyl group which must be esterifiable with the high molecular weight poly (oxy alkylene)diamine (iii)(a)(1). These polyoxyalkylene diimide diacids and processes for their preparation are disclosed in U.S. Patent No. 4,556,705, incorporated herein by reference.

In this two-pot process the amount of polyoxyalkylene diimide diacid and dicarboxylic acid utilized is generally not critical in forming the polyetherimide esters of the present invention. However, preferred amounts of the polyoxyalkylene diimide diacid and dicarboxylic acid are such that the weight ratio of the polyoxyalkylene diimide to the dicarboxylic acid is from about 0.002 to 2.01:1, preferably from about 0.01 to 2.01:1, more preferably from about 0.25 to 2.0:1, and most preferably from about 0.4 to 1.4:1.

It is also possible, as described in U.S. Patent No, 4,556,688, to prepolymerize the aromatic dicarboxylic acid and the diol to form a prepolyester, and then react this prepolyester with either the diimide diacid or with the tricarboxylic and the poly(oxy alkylene)diamine. Forming the prepolyester can be achieved by conventional esterification techniques such as those described in U.S. Patent Nos. 2,465,319 and 2,910,466, all of which are incorporated by reference.

In its preferred embodiment, the polyetherimide esters of the instant invention comprise the reaction products of dimethylterephthalate, optionally with up to 40 mole percent of another dicarboxylic acid or its ester forming derivative; butane diol, optionally with another diol such as butene diol, hexanediol, or cyclohexane dimethanol; and either a poly(oxy alkylene)diamine having an average molecular weight of from about 600 to about 12,000, preferably from about 900 to about 4,000, and trimellitic anhydride, or a polyoxyalkylene diimide diacid.

The instant polyetherimide esters may be prepared by conventional esterification/condensation reactions for the production of polyesters. These processes are described, inter alia, in U.S. Patents Nos. 3,763,109; 3,651,014; 3,801,547; 4,556,705, and 4,556,688, all of which are incorporated herein by reference.

The polyetherimide esters of the instant invention contain at least the following two recurring structural units;

IV. 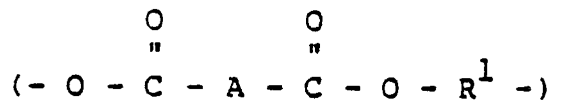 ,

and

V. 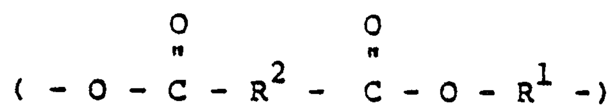

wherein:

A is the residue of the polyoxyalkylene diimide diacid absent the two carboxyl groups, i.e.,

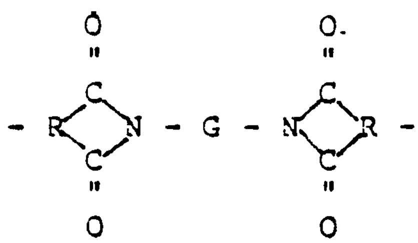

$R^1$ is the residue of the dio absent the two hydroxyl groups,
$R^2$ is the residue of the dicarboxylic acid absent the two carboxyl groups, and
G is as defined hereinafter.

Additionally, while not prepared, it is customary and preferred to utilize a catalyst or catalyst system in the process for the production of the present polyetherimide esters. These types of catalysts are set forth in U.S. Patent Nos. 4,556,705 and 4,566,688, both of which are incorporated herein by reference.

Both batch and continuous methods can be used for any stage of the ether imide ester polymer preparation. Polycondensation of the polyester prepolymer with the polyoxyalkylene diimide diacid can also be accomplished in the solid phase by heating finely divided solid polyester prepolymer with the diimide diacid in a vacuum or in a stream of inert gas to remove liberated low molecular weight diol. This method has the advantage of reducing degradation because it must be used at temperatures below the softening point of the prepolymer.

Polycarbonates suitable for use in the present invention are any of those known in the art. Especially preferred polycarbonates are high molecular weight, thermoplastic, aromatic polymers and include homopolycarbonates, copolycarbonates and copolyestercarbonates and mixtures thereof which have average molecular weights of about 8,000 to more than 200,000, preferably of about 20,000 to 80,000 and an I.V. of 0.30 to 1.0 dl/g as measured in methylene chloride at 25 C. In one embodiment, the polycarbonate are derived from dihydric phenols and carbonate precursors and generally contain recurring structural units of the formula;

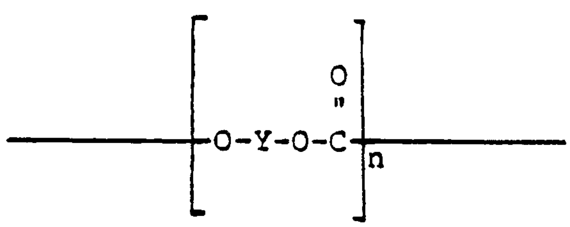

where Y is a divalent aromatic radical remaining after removal of the hydroxy groups from the dihydric

phenol employed in the polycarbonate producing reaction, and n is greater than 1, preferably from about 10 to about 400.

Preferred polycarbonates resins are of the formula:

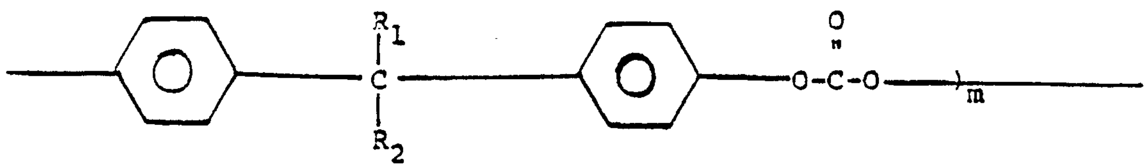

wherein $R_1$ and $R_2$ are independently hydrogen, (lower) alkyl cr phenyl and m is at least 30 preferably between 40 and 300. The term (lower) alkyl includes hydrocarbon groups of from 1 to 6 carbon atoms.

Suitable dihydric phenols for producing polycarbonates include, for example, 2,2-bis(4-hydroxyphenyl)propane, bis(4-hydroxyphenyl)methane, 2,2-bis(4-hydroxy-3-methylphenyl)-propane,4,4-bis(4-hydroxyphenyl) heptane, 2,2-(3,5,3',5'-tetrachloro-4,4'-dihyroxyphenyl)propane, 2,2-(3,5,3'5'-tetrabromo-4,4'-dihydroxyphenol)propane, and 3,3'-dichloro-4,4'-dihydroxydiphenyl)methane.

Other dihydric phenols which are also suitable for use in the preparation of the above polycarbonates are disclosed in U.S. Patent Nos. 2,999,835; 3,038,365; 3,169,121; 3,334,154; and 4,131,575, incorporated herein by reference.

It is, of course, possible to employ two or more different dihydric phenols or a copolymer of a dihydric phenol with a glycol or with a hydroxy or acid terminated polyester, or with a dibasic acid in the event a carbonate copolymer or interpolymer rather than a homopolymer is desired for use in the preparation of the blends of the invention. Blends of any of the above materials can also be employed to provide the aromatic polycarbonate. In addition, branched polycarbonates such as are described in U.S. Patent No. 4,001,184, can also be utilized in the practice of this invention, as can blends of a linear polycarbonate and branched polycarbonate.

The carbonate precursor employed can be either a carbonyl halide, a carbonate ester or a haloformate. The carbonyl halides which can be employed are carbonyl bromide, carbonyl chloride and mixtures thereof. Typical of the carbonate esters which can be employed are diphenyl carbonate; a di(halophenyl)carbonate such as di(trichlorophenyl) carbonate, di(tribromophenyl)carbonate, etc.; di(alkylphenyl) carbonate such as di(tolyl)carbonate, etc.; di(naphthyl)carbonate; di(chloronaphthyl)carbonate; etc., or mixtures thereof. The suitable haloformates include bis-haloformates of dihydric phenols (bischloroformates of hydroquinone, etc.) or glycols (bishaloformates of ethylene glycol, neopentyl glycol, polyethylene glycol, etc.). While other carbonate precursors will occur to those skilled in the art, carbonyl chloride, also known as phosgene, is preferred.

The polycarbonate may also be a copolyestercarbonate as described by Clayton B. Quinn in U.S. Patent 4,430,484 and Kenneth Miller in U.S. Patent No. 4,465,820. and the references cited therein, incorporated herein by reference. Preferred polyestercarbonates are those derived from the dihydric phenols and carbonate precursors described above and aromatic dicarboxylic acids or their reactive derivatives, such as the acid dihalides, e.g. dichlorides. A quite useful class of polyestercarbonates are the aromatic polyester carbonates derived from bisphenol A; terephthalic acid or isophthalic acid or a mixture thereof or their respective acid chlorides; and phosgene. If a mixture of terephthalic acid and isophthalic acid is employed, the weight ratio of terephthalic acid to isophthalic acid may be from about 2:8 to about 8:2.

The polycarbonates of the subject blends can be manufactured by known processes, such as, for example, by reacting a dihydric phenol with a carbonate precursor such as diphenyl carbonate or phosgene in accordance with methods set forth in the above-cited literature and U.S. Patent Nos. 4,018,750 and 4,123,436, or by transesterification processes such as are disclosed in the U.S. Patent No. 3,153,008, as well as other processes known to those skilled in the art. The aromatic polycarbonates are typically prepared by employing a molecular weight regulator, an acid acceptor and a catalyst. The molecular weight regulators which can be employed include phenol, cyclohexanol, methanol, alkylated phenols, such as octylphenol, paratertiary-butyl-phenol, etc. Preferably, phenol or an alkylated phenol is employed as the molecular weight regulator.

The acid acceptor can be either an organic or an inorganic acid acceptor. A suitable organic acid acceptor is a tertiary amine and includes such materials as pyridine, triethylamine, dimethylaniline, tributylamine, etc. The inorganic acid acceptor can be one which can be either a hydroxide, a carbonate, a bicarbonate, or a phosphate of an alkali or alkaline earth metal.

The catalyst which can be employed are those that typically aid the polymerization of the monomer with phosgene. Suitable catalysts include tertiary amines such as triethylamine, tripropylamine, N,N-dimethylaniline, quanternary ammonium compounds such as, for example, tetraethylammonium bromide, cetyl triethyl ammonium bromide, tetra-n-heptylammonium iodide, tetra-n-propyl ammonium bromide, tetramethyl-ammonium chloride, tetra-methyl ammonium hydroxide, tetra-n-butyl ammonium iodide, benzyltrimethyl ammonium chloride and quaternary phosphonium compounds such as, for example, n-butyltriphenyl phosphonium bromide and methyltriphenyl phosphonium bromide.

Also included are branched polycarbonates wherein a polyfunctional aromatic compound is reacted with the monomer and carbonate precursor to provide a thermoplastic randomly branched polycarbonate. The polyfunctional aromatic compounds contain at least three functional groups which are carboxyl, carboxylic anhydride, haloformyl, or mixtures thereof. Illustrative polyfunctional aromatic compounds which can be employed include trimellitic anhydride, trimellitic acid, trimellityl trichloride, 4-chloroformyl phthalic anhydride, promellitric acid, pyromellitic dianhydride, mellitic acid, mellitic anhydride, trimesic acid, benzophenonetetracarboxylic acid, benzophenonetetracarboxylic anhydride, and the like. The preferred polyfunctional aromatic compounds are trimellitic anhydride and trimellitic acid or their acid halide derivatives. Additionally, the polycarbonates resin/polyetherimide ester resin blend can contain other resin components.

Depending upon the needs of the individual practitioner of the invention, the blends of the present invention can contain one or more additional resin components, as long as such additional resin components are compatible with the basic polycarbonate resin/polyetherimide ester resin blended mixture. It has been discovered that the stabilizers of the present invention will still be effective in such blends that contain additional resin components. One example of an additional resin component that is compatible with the original blended mixture is a poly(alkylene terephthalate) resin. The preferred poly(alkylene terephthalate) resins are poly(butylene terephthalate) resin and poly(ethylene terphthalate) resin.

The ratio of polycarbonate resin to polyetherimide ester resin is not important to the present invention. However, preferably the ratio of polycarbonate resin component to polyetherimide ester resin component ranges from about 1:99 to about 99:1, and most preferably from about 10:90 to about 90:10.

## DESCRIPTION OF THE PREFERRED EMBODIMENTS

The following examples illustrate the present invention, but are not intended to limit the scope of the claims in any manner whatsoever. All parts are by weight unless otherwise specified.

All compositions were prepared by melt blending the various components in a Prodex single screw extruder.

Examples 3 through 6 illustrate that the stabilizers of the present invention are effective when there is a third resin component in the polyetherimide ester/polycarbonate compositions; in the present instance, the third component was a poly(ethylene terephthalate).

Table I sets forth the composition of each of the Examples 1 through 8, inclusive. Table II sets forth the melting points for the polyetherimide ester resin component of each compositions and, where appropriate, the poly(ethylene terephthalate) component.

Examples 1, 3, 5 and 7 are outside the scope of the present invention and are the controls. Examples 2, 4, 6 and 8 illustrate the present invention.

TABLE I

| Example | PEE | PC | PET | SDP |
|---|---|---|---|---|
| 1 | 1000 | 4000 | --- | --- |
| 2 | 1000 | 4000 | --- | 30 |
| 3 | 1000 | 3000 | 1000 | --- |
| 4 | 1000 | 3000 | 1000 | 30 |
| 5 | 3000 | 1000 | 1000 | --- |
| 6 | 3000 | 1000 | 1000 | 30 |
| 7 | 4000 | 1000 | --- | --- |
| 8 | 4000 | 1000 | --- | 30 |

PEE is a polyetherimide ester resin having a modulus of 25,000.
PC is a poly(bisphenol A)carbonate.
PET is a poly(ethylene terephthalate).
SDP is a monosodium phosphate ($NaH_2PO_4$).

TABLE II

| Example | Melting Pt. (PEE) °C. | Melting Pt.(PET) °C. |
|---|---|---|
| 1 | 195 | --- |
| 2 | 201 | --- |
| 3 | 199 | 250 |
| 4 | 202 | 253 |
| 5 | 203 | 247 |
| 6 | 206 | 252 |
| 7 | 205 | --- |
| 8 | 206 | --- |

The stabilizing effect of the monosodium phosphate is demonstrated by the higher melting points of Examples 2, 4, 6 and 8 in comparison to their respective controls.

Obviously, other modifications and variations of the present invention are possible in light of the above teachings. It is, therefore, to be understood that changes may be made in the particular embodiments of the invention described which are within the full intended scope of the invention as defined by the appended claims. Obviously, flame retardants, stabilizers, fillers, and pigments can be advantageously employed by those skilled in the art in the present invention using conventional mixing methods.

## Claims

1. A thermoplastic composition comprising:
(a) at least one polycarbonate resin;
(b) at least one polyetherimide ester resin; and
(c) a melt-stabilizing amount of monosodium phosphate, monopotassium phosphate or a mixture thereof.

2. A composition as defined in claim 1 wherein the ratio of (a) to (b) ranges from about 1:99 to about 99:1.

3. A composition as defined in claim 2 wherein the ratio of (a) to (b) ranges from about 10:90 to about 90:10.

4. A composition as defined in claim 1 containing from above 0.01 to about 7.5 parts by weight of said phosphates per 100 parts by weight of (b).

5. A composition as defined in claim 4 containing from about .1 to about 4.0 parts by weight of said phosphate per 100 parts by weight of (b).

6. A composition as defined in claim 1 wherein component (c) is monosodium phosphate.

7. A composition as defined in claim 1 wherein said polycarbonate resin (a) is derived from a diphenol and phosgene or a phosgene precursor.

8. A composition as defined in claim 6 wherein said polycarbonate resin (a) is poly(bisphenol A carbonate).

9. The composition of claim 1 wherein said polyetherimide ester resin is comprised of the reaction products of:

(a) at least one diol;

(b) at least one dicarboxylic acid or an ester forming reactive derivative thereof; and

(c) a set of reactants selected from

(1)(i) at least one high molecular weight poly(oxy alkylene)diamine, and (ii) at least one tricarboxylic acid or a derivative thereof; or

(2) at least one high molecular weight polyoxyalkylene diimide diacid.

10. The composition of claim 9 wherein said diol is a low molecular weight diol.

11. The composition of claim 9 wherein said diol has a molecular weight of about 250 or less.

12. The composition of claim 9 wherein said diol contains from 2 to about 15 carbon atoms.

13. The composition of claim 9 wherein said dicarboxylic acid or its derivatives is an aromatic dicarboxylic acid or its derivative.

14. The composition of claim 9 wherein (c) is (1).

15. The composition of claim 14 wherein said high molecular weight poly(oxy alkylene)diamine is represented by the formula

$H_2N\text{-}G\text{-}NH_2$

wherein G is the radical remaining after the removal of the amino groups of a long chain alkylene ether diamine.

16. The composition of claim 14 wherein said tricarboxylic acid or its derivative is represented by the formula

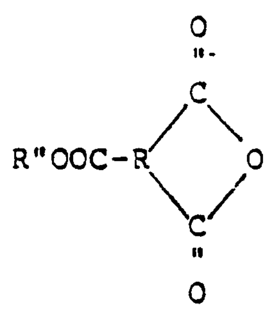

wherein R is a $C_1$ to $C_{20}$ trivalent aliphatic, cycloaliphatic or aromatic radical, and $R''$ is hydrogen or a $C_1$-$C_6$ aliphatic monovalent radical.

17. The composition of claim 9 wherein (c) is (2).

18. The composition of claim 17 wherein said high molecular weight polyoxyalkylene diimide diacid is represented by the formula

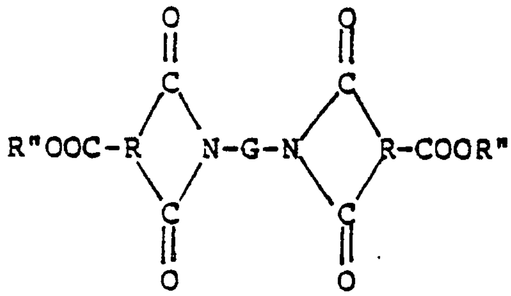

wherein:

each R is independently selected from $C_1$-$C_{20}$ aliphatic, cycloaliphatic or aromatic trivalent organic radicals; each $R''$ is independently selected from hydrogen, $C_1$-$C_6$ aliphatic or cycloaliphatic organic radicals, or $C_6$-$C_{12}$ aromatic monovalent organic radicals; and
G is the radical remaining after the removal of the amino groups of a long chain alkylene ether diamine.
19. The composition of claim 1 wherein said polyetherimide ester resin is comprised of at least the following recurring structural units:

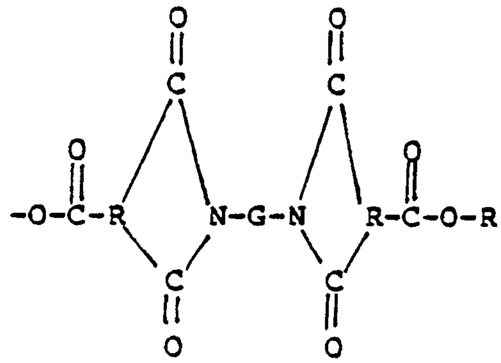

and

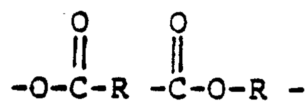

wherein:
R is the residue of a diol absent the two hydroxyl groups;
$R^1$ is the residue of a dicarboxylic acid absent the two carboxyl groups;
$R^2$ is a trivalent organic radical; and
G is the radical remaining after the removal of the amino groups of a long chain poly(oxy alkylene) diamine.
20. The composition of claim 19 wherein R is the residue of an aromatic dicarboxylic acid.
21. A composition as defined in claim 1 which also includes (b) an impact modifier resin.
22. A composition as defined in claim 1 which also includes a flame-retardant amount of a flame retardant additive or a combination of such additives.
23. The composition of claim 1 which further contains at least one additional resin component which is compatible to the polycarbonate/polyetherimide ester resin blend.
24. The composition of claim 23 wherein the one additional resin component is a poly(alkylene terephthalate) resin.
25. The composition of claim 24 wherein the poly(alkylene terephthalate) resin is poly(ethylene terephthalate).
26. The composition of claim 24 wherein poly(alkylene terephthalate) resin is poly(butylene terephthalate).

European Patent Office

# EUROPEAN SEARCH REPORT

Application Number

EP 89 11 6089

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X<br>Y | US-A-4 814 396 (N.-I. LIU)<br>* claims; column 11, lines 6-12 * | 1-3,7-20,22<br>1-24,26 | C 08 L 69/00<br>C 08 L 79/08<br>C 08 K 3/32<br>C 08 L 67/02 //<br>(C 08 L 79/08<br>C 08 L 69:00<br>C 08 K 3:32 )<br>(C 08 L 79/08<br>C 08 L 69:00<br>C 08 L 67:02<br>C 08 K 3:32 ) |
| Y | EP-A-0 325 719 (GENERAL ELECTRIC CO.)<br>* claims 1,5,12,13; page 7, lines 48,49 * | 1-20,22 | |
| Y | US-A-4 814 380 (N.-I. LIU)<br>* claims 1-4,12-43; column 15, lines 41,64 * | 1-3,7-24,26 | |
| Y | US-A-4 532 290 (D.B.G. JAQUISS et al.)<br>* claims 1,4-11,15; columns 3,4, examples * | 1-24,26 | |

TECHNICAL FIELDS SEARCHED (Int. Cl.5)

C 08 L
C 08 K

The present search report has been drawn up for all claims

| Place of search | Date of completion of the search | Examiner |
|---|---|---|
| BERLIN | 12-04-1990 | VOIGTLAENDER R O J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)